Europäisches Patentamt

European Patent Office

Office européen des brevets

(11) Publication number: 0 450 068 A1

## EUROPEAN PATENT APPLICATION
## published in accordance with Art. 158(3) EPC

(21) Application number: 89911398.9

(22) Date of filing: 13.10.89

(86) International application number:
PCT/JP89/01053

(87) International publication number:
WO 91/05595 (02.05.91 91/10)

(51) Int. Cl.5: B01D 63/02, D04B 23/02

(43) Date of publication of application:
09.10.91 Bulletin 91/41

(84) Designated Contracting States:
DE FR GB IT NL

(71) Applicant: MITSUBISHI RAYON CO., LTD.
3-19, Kyobashi 2-chome Chuo-Ku
Tokyo 104(JP)

(72) Inventor: KATO, Osami Products Dev. Lab.
Mitsubishi Rayon Co. Ltd 1-60, Sunadabashi
4-chome
Higashi-ku Nagoya-shi, Aichi 461(JP)
Inventor: ISHIKAWA, Seiko Products
Development Laboratories
Mitsubishi Rayon Co.Ltd. 1-60, Sunadabashi
4-chome

Higashi-ku Nagoya-shi, Aichi 461(JP)
Inventor: IRIYAMA, Tsutomu Products
Development Laboratories
Mitsubishi Rayon Co.Ltd. 1-60 Sunadabashi
4-chome
Higashi-ku Nagoya-shi, Aichi 461(JP)
Inventor: MORI, Tatsujiro Products
Development Laboratories
Mitsubishi Rayon Co.Ltd. 1-60, Sunadabashi
4-chome
Higashi-ku Nagoya-shi, Aichi 461(JP)

(74) Representative: Jones, Helen Marjorie
Meredith et al
Gill Jennings & Every 53-64 Chancery Lane
London WC2A 1HN(GB)

(54) METHOD AND APPARATUS FOR PRODUCING HOLLOW YARN FILM KNITTED ARTICLE.

(57) This invention relates to a hollow yarn film knitted article obtained by disposing at least one warp knitting line consisting of ordinary fiber filaments (8, 8'; 9, 9') with a gap and passing hollow yarn films (11) in a weft direction over and under the stitches of the warp line, and to a production method of the knitted article. The knitted article production apparatus comprises hollow yarn film guide bars (1, 1'; 2, 2') disposed with gaps between them to the right and left and capable of moving up and down; a feed member (10) for supplying the hollow yarn film around the guide bars (1, 1'; 2, 2'), latch needles capable of knitting the hollow yarn film, (3, 3'; 4, 4') capable of moving up and down, and warp supply members (6, 6'; 7, 7') for the latch needles.

Fig. 1

## TECHNICAL FIELD

This invention relates to a method of manufacturing a hollow fiber membrane knitted fabric which can be used to manufacture a hollow fiber membrane module used in an artificial lung, an artificial dialysis, a plasmapheresis machine, the pure water manufacturing field, the gas filtering field, and in a water purifier or the like, and a manufacturing apparatus therefor.

## PRIOR ART

A hollow fiber membrane module is generally manufactured by cutting a bundle of skeins of a hollow fiber membrane to a predetermined length, accommodating the cut bundle in a receptacle, and fixing the ends of the hollow fiber membrane to the receptacle by an epoxy resin or a urethane resin or the like. When the ends of the hollow fiber membrane are fixed with a state that openings of the hollow fiber membrane are kept open however, the resin may penetrate the opening, and thus the hollow fiber membrane cannot be used as a module. Accordingly, a method of temporarily sealing the ends of the bundle of the hollow fiber membrane with a resin or the like, fixing the sealed ends to the receptacle, and cutting the fixed portion of the bundle of the hollow fiber membrane to open the ends of the bundle of the hollow fiber membrane was adopted.

This method, however, had problems such as a processing cost required for the temporary sealing and a reliability of the temporary sealing during a module manufacturing process, a disorder of the bundle of the hollow fiber membrane generated when fixing the sealed end of the bundle, and a reliability of the fixing by the fixing process.

Namely, the temporary sealing portion is to be discarded when the module is completed, but the temporary sealing portion is indispensable, and it is necessary to expend extra material costs and extra processing costs when preparing the temporarily sealed portion. Further, it is impossible to recognize whether or not the temporary sealing is attained, when carrying out the temporary sealing. Namely, the quality of the temporary sealing cannot be recognized until a cross section of the fixed portion is observed after the module is manufactured. Further, openings of the hollow fiber membrane may be partially sealed with a resin used for fixing the bundle of the hollow fiber membrane to the receptacle, and accordingly it is impossible to obtain a membrane having a predetermined area, and thus some of the obtained modules might have to be discarded as inferior products.

Further, a method of accommodating a plurality of bundles of hollow fiber membranes in the receptacle is used in this method, and accordingly it is necessary to arrange the plurality of the bundles of the hollow fiber membranes in good order and accommodate the plurality of the bundles in the receptacle. If this orderly arrangement is not adopted, the hollow fiber membranes arranged on a circumferential portion of the bundle are disordered and ends of the hollow fiber membranes are embedded in the fixing resin, and as a result, a problem arises in that an effective use of the hollow fiber membrane cannot be attained.

Further, since the hollow fiber membranes are used in the form of the bundle, the hollow fiber membranes may be filled in a relatively condensed state, and thus the fixing resin does not properly penetrate between the hollow fiber membranes in a central portion of the bundle of the hollow fiber membranes during the fixing operation, and as a result, a problem arises in that a non-conforming product caused by an inferior fixing is often generated.

As a method of winding the hollow fiber membranes on a skein frame having a shape of a quadrangle, a hexagon, an octagon or the like at a winding time of between several tens and several hundreds, a skein method is generally used for making up the hollow fiber membranes as a bundle. In this method, it is necessary to bind the hollow fiber membranes with paper, threads or the like, before obtaining the cut bundle, so that the hollow fiber membrane to be formed as the bundle are not scattered, and this operation is very cumbersome.

Further, a number of the bundles of hollow fiber membranes obtained at one winding operation is limited in the skein method, and accordingly, the productivity of the skein method is extremely low.

Japanese Unexamined Patent Publication (Kokai) No. 62-57965 and Japanese Unexamined Utility Model Publication (Kokai) No. 1-92203 disclose a knitted fabric of hollow fiber membrane, but those publication do not concretely disclose a method of and an apparatus for treating the hollow fiber membranes to form the knitted fabric without damage to the hollow fiber membrane. Further, an interval of needles defining a distance between weft yarns is around 1.6 mm is a conventional raschel knitting machine, and an upper limit of a moving width of the weft yarn may be around 16 mm.

## DISCLOSURE OF THE INVENTION

The inventors made an intense investigation into a method of manufacturing a hollow fiber membrane module without the above-mentioned problems, taking into consideration the above-mentioned state, and thus accomplished the present invention.

The present invention aims to provide a manufacturing method capable of eliminating the problems of the prior art and obtaining a bundle of hollow fiber membranes from which a hollow fiber membrane module can be easily processed, and a manufacturing apparatus thereof.

Therefore, in accordance with the present invention, there is provided a method of manufacturing a hollow fiber membrane knitted fabric in which an endless hollow fiber membrane is arranged in a folded state, comprising supplying the hollow fiber membrane from a hollow fiber membrane supply means, to a pair of hollow fibre membrane guide bars wich are arranged at a left side and a right side, respectively, with a predetermined distance between them and which can be raised and lowered, the supply means running in a plane around the pair of guide bars, and supplying a warp yarn from substantially upper positions from a latch needle capable of being raised and lowered in a region enclosed by a running path of the hollow fiber membrane supply means respectively.

Preferably, the hollow fiber membrane guide bar and the latch needle are synchronously raised and lowered twice during a cycle of the movement of the hollow fiber membrane supply means, in the manufacturing method in accordance with the present invention.

Further, preferably a portion of the knitted fabric is formed only of the warp yarn, by temporarily stopping a movement of the hollow fiber membrane supply means, or two or more latch needles are used and a warp yarn supplied to at least one latch needle is of a different colour to warp yarn(s) supplied to the other latch needle.

Further, preferably a pair of hollow fiber membrane guide bars planted at a distance of at least 50 mm are used, to make a module having a suitable length.

An apparatus for manufacturing a hollow fiber membrane knitted fabric according to the present invention is characterized in that the apparatus comprises a pair of hollow fiber membrane guide bars arranged at a left side and a right side, respectively, with a predetermined distance between them and which can be raised and lowered, a hollow fiber membrane supply means running in a plane around the pair of hollow fiber membrane guide bars, a plurality of latch needles which can be raised and lowered in a region enclosed by a running path of the hollow fiber membrane supply means, and a warp yarn supply means arranged on a position substantially higher than the latch needles and able to supply a warp yarn to the latch needles respectively, the apparatus being constituted in such a manner that the hollow fiber membrane guide bars and the latch needles are synchronously raised and lowered twice during a cycle of a movement of the hollow fiber membrane supply means.

BRIEF DESCRIPTION OF THE DRAWINGS

Figure 1 is a schematic perspective view illustrating a knitting of a hollow fiber membrane knitted fabric by a preferable apparatus implementing a manufacturing method in accordance with the present invention;

Fig. 2 is a plane view illustrating a running path of a traverse guide, viewed from above the apparatus shown in Fig. 1;

Fig. 3 is a partially enlarged perspective view of the knitting state shown in Fig. 1;

Figs. 4(a) to 4(b) are explanatory views sequentially illustrating knitting loop forming processes at when implementing the knitting method in accordance with the present invention;

Fig. 5 is a plane view corresponding to Fig. 2 and illustrating a state wherein the traverse guide runs on a path having a shape like a figure-of-eight;

Fig. 6 is a schematic view illustrating a hollow fiber membrane knitted fabric including a portion knitted only by warp yarns; and

Fig. 7 is a schematic perspective view of a bundle of the hollow fiber membranes obtained by bundling the hollow fiber membrane knitted fabric into a spiral shape.

BEST MODE OF CARRYING OUT THE INVENTION

The present invention will be described hereafter with reference to the accompanying drawings, which illustrate a preferable apparatus for implementing a method in accordance with the present invention.

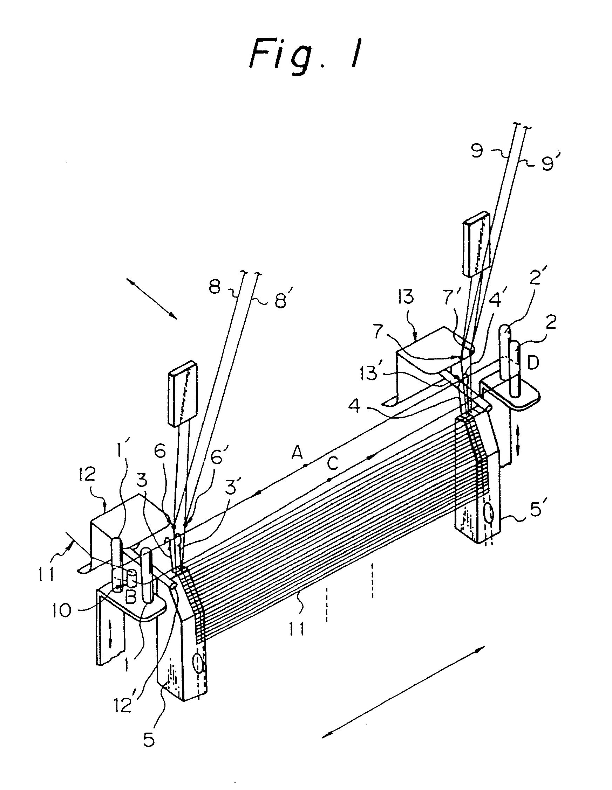

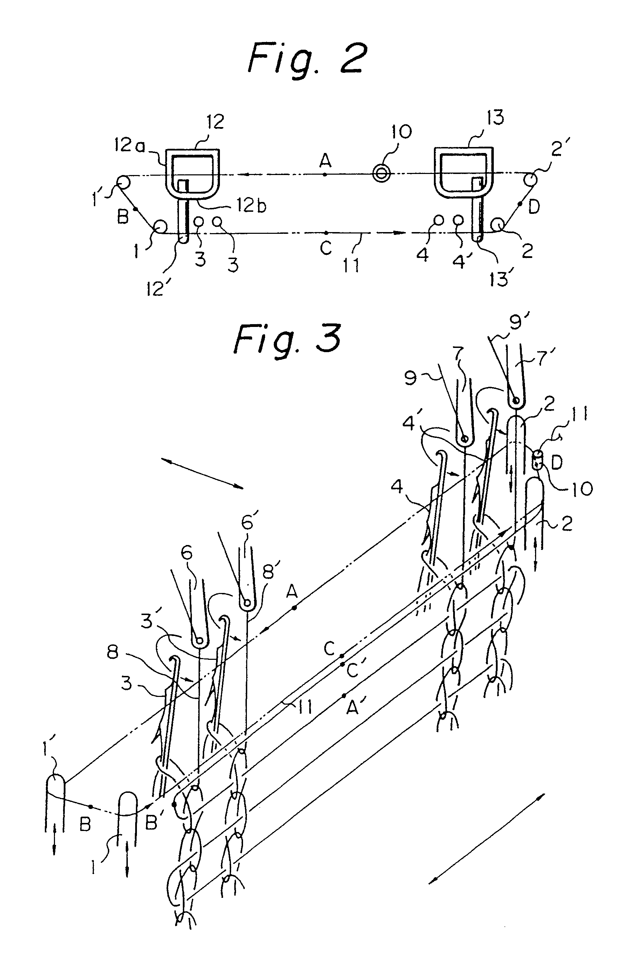

Figure 1 shows an outline of a knitting operation in an apparatus for manufacturing the hollow fiber membrane knitted fabric in accordance with the present invention, and Fig. 2 is a plan view seen from above the apparatus shown in Fig. 1, and shows a running path of a traverse guide used for supply the hollow fiber membrane.

Guide bars 1 and 1', and guide bars 2 and 2, are planted in a vertical direction at a left side and a right side of a knitted fabric manufacturing apparatus with a distance between them of from 50 mm to 1000 mm, preferably a distance of 50 mm - 500 mm, and raised or lowered by a drive device (not shown). Each of two latch needles 3 and 3' or 4 and 4' are vertically arranged along a direction of the guide bar inward from the left guide bars 1 and 1' and the right guide bars 2 and 2,, and each pair of latch needles 3 and 3'; 4 and 4' can be moved in a vertical direction along grooves formed in each trick plate 5 and 5', respectively, whereby a raising and lowering movement of the latch needle is synchronized with a raising and lowering movement of the guide bars 1 and 1'; 2 and 2'.

Warp yarn supply guides 6 and 6'; 7 and 7', the number of which corresponds to that of the latch needles, are arranged at a position above each of the latch needles 3 and 3'; 4 and 4,, and when each of the latch needles 3 and 3', 4 and 4' is at an upper dead point thoseof, the warp yarn supply guides 6 and 6'; 7 and 7' move in a U letter-like movement so that the warp yarn supply guides turn around hooks of the latch needle to supply the warp yarn 8 and 8'; 9 and 9' into the inner sides of each hooks.

The numeral 10 denotes a traverse guide i.e., a hollow fiber membrane supply means of supplying and guiding one or a plurality of the hollow fiber membranes 11 (referred to as hollow fiber membrane(s) hereafter) into a knitting loop of the warp yarn as a weft yarn. The traverse guide 10 runs on a plane around an outside of the guide bars 1' and 1; 2 and 2' without crossing, as shown by an arrow in Fig. 2. Namely, the traverse guide 10 passes from a point A shown as a central point in Fig. 1 to a hook side of the latch needles 3' and 3 arranged on a left side of the apparatus, turns around the two guide bars 1' and 1, passes over a side opposite to the hook side of the latch needles 3 and 3', passes on a side opposite to a hook side of the latch needles 4 and 4' arranged on a right side of the apparatus, turns around the two guide bars 2 and 2', passes over the hook side of the latch needles 4 and 4', and then reaches the point A, whereby one cycle of the movement of the traverse guide 10 is completed.

Each guide bar 1 and 1'; 2 and 2' and each latch needle 3 and 3'; 4 and 4' are synchronously raised and lowered during the running of the traverse guide 10.

A timing of the movement of the traverse guide 10 will be described with reference to Fig. 2. When the traverse guide 10 is at the central point A shown in Fig. 1, all of the guide bars 1 and 1'; 2 and 2' and all of the latch needles 3 and 3'; 4 and 4' have been lowered to the lower most position, i.e., a lower dead point, and all of the guide bars 1 and 1'; 2 and 2' and all of the latch needles 3 and 3'; 4 and 4' are raised from a time that the traverse guide passes over the point A, top ends of all of the guide bars 1 and 1'; 2 and 2' are arranged at a position above the plane in which the traverse guide 10 runs when the traverse guide 10 passes over the guide bar 1', and all of the guide bars 1 and 1'; 2 and 2' and all of the latch needles 3 and 3'; 4 and 4' continue the raising movement thereof, and then reach their upper most position, i.e., the upper dead point, when the traverse guide reaches a middle point B between the guide bar 1 and the guide bar 1' arranged on a left side of the apparatus. When the traverse guide has passed over the middle point B, all of the guide bars 1 and 1'; 2 and 2' and the latch needles 3 and 3'; 4 and 4' are lowered, and this movement is continued until the traverse guide 10 reaches a point C, and all of the guide bars 1 and 1'; 2 and 2' and the latch needles 3 and 3'; 4 and 4' are then at their lower most position, i.e., the lower dead point.

Next, all of the guide bars 1 and 1'; 2 and 2' and the latch needles 3 and 3'; 4 and 4' are raised from a time that the traverse guide 10 has passed over the point C, top ends of all of the guide bars 1 and 1'; 2 and 2' are arranged above the plane in which the traverse guide 10 runs when the traverse guide 10 passes over the guide bar 2, and all of the guide bars 1 and 1'; 2 and 2' continue the raising movement thereof, and then reach the upper most position, i.e., the upper dead point, when the traverse guide reaches a middle point D between the guide bar 2 and the guide bar 2' arranged on a right side of the apparatus. When the traverse guide has passed over the middle point D, all of the guide bars 1 and 1'; 2 and 2' and the latch needles 3 and 3'; 4 and 4' are lowered, and this movement is continued until the traverse guide 10 reaches the point D and all of the guide bars 1 and 1'; 2 and 2' and the latch needles 3 and 3'; 4 and 4' are arranged at their lower most position, i.e., the lower dead point when the traverse guide reaches at point A.

Accordingly, all of the guide bars 1 and 1'; 2 and 2' and the latch needles 3 and 3'; 4 and 4' are twice raised and lowered during each cycle of the movement of the traverse guide 10.

In Figs. 1 and 2, the numerals 12 and 13 denote a stationary guide arranged to prevent a jump of a latch generated when raising latch needles 3 and 3'; 4 and 4', and the numerals 12' and 13' denote a stationary protruding bar having a bar-like shape and protruded in a horizontal direction from top ends of the stationary guides 12 and 13. The protruding bars 12' and 13' are arranged to cross over the top faces of each trick plate 5 at a position between the latch needles 3 and 3' and the guide bars 1 and 1' at the left side, and a position between the latch needles 4 and 4' and the guide bars 2 and 2' at the right side, and preferably the protruding bars 2 are located as near as possible to the latch needles 3 and 3'; 4 and 4'.

Due to the above-mentioned constitution, the hollow fiber membrane(s) 11 supplied from an upper position can be wound around either guide bar which is raised synchronously with a timing of a movement of the traverse guide 10 in both guide bars from an outside thereof by the traverse guide which is running reciprocally thereto. At this time, other guide bars are also raised, but are not used to guide the hollow fiber membrane(s), and at a next raising of the latter guide bar, the hollow fiber membrane(s) 11 is wound on the latter guide bar instead of the former guide bar.

Further, at this time, all of the latch needles 3 and 3'; 4 and 4' are at the upper dead points thereof, respectively, and each warp yarn supply guide 6 and 6'; 7 and 7' is reciprocally moved in a small U-like path on an plane over the latch needles, to thereby feed and wind warp yarn 8 and 8', 9 and 9' onto a hook, respectively.

When the hollow fiber membrane(s) 11 is wound on the guide bar at either side, all of the guide bars 1 and 1'; 2 and 2' start are lowered.

These movements will be described in detail with reference to Fig. 3 hereafter.

Fig. 3 shows relative positions between members constituting the apparatus when the hollow fiber membrane(s) 11 goes from the point C to the point D. A curve illustrated as a two dots chain line shows a running path of the traverse guide 10.

When the traverse guide 10 is at point C, the guide bars 1 and 1' in the left side and the guide bars 2 and 2' in the right side are in the lower most position, i.e., the lower dead point. When the traverse guide 10 has passed over the point C, all of the guide bars 1 and 1'; 2 and 2' and all of the latch needles 3 and 3'; 4 and 4' are raised. Fig. 3 shows a state wherein the traverse guide 10 reaches a middle point D between the guide bar 2 in a right and front side and the guide bar 2' in a right and back side, after the guide bar has passed over the point C and moved around the guide bar 2 in the right and front side. At this time, the hollow fiber membrane(s) 11 guided by the traverse guide 10 moving along an arrow line A → B → C and wound around the guide bar 1 and 1' in the left side is removed from the guide bar 1 and 1', and a portion of the hollow fiber membrane(s) positioned between the point A and the point B is inserted to a knitting loop as a portion between a point A' and a point B', and a portion of the hollow fiber membrane(s) positioned between the point B and the point C is moved to an opposite side of hooks of the latch needles 3 and 3', transferred to a loop of a warp yarn formed in a previous step, and becomes a portion between a point B' and a point C'. Then, when a hollow fiber membrane(s) wound around the traverse guide 2 and 2' in the right side is removed from the traverse guide, the hollow fiber membrane(s) shown in Fig. 3 as the portion between B', C' and D is inserted to a knitting loop of the warp yarn. As a result, a hollow fiber membrane(s) 11 positioned in a top most line is transferred to a knitting loop of the warp yarn formed at a previous knitting step and inserted and knitted to a knitting loop at a next knitting loop formation.

When forming a knitting loop, the hollow fiber membrane(s) 11 wound around the guide bars 2 and 2' is lowered with the guide bars 2 and 2', a lowering movement of the hollow fiber membrane(s) 11 is intercepted by a stationary guide 13 and a stationary protruding bar 13' arranged at a position lower than a running path of the hollow fiber membrane(s) and the guide bar 2 and 2' only is lowered, and as a result, the hollow fiber membrane(s) 11 can be removed from the guide bars 2 and 2'. At the same time, the latch needles 3 and 3'; 4 and 4' are also lowered to form knitting loops.

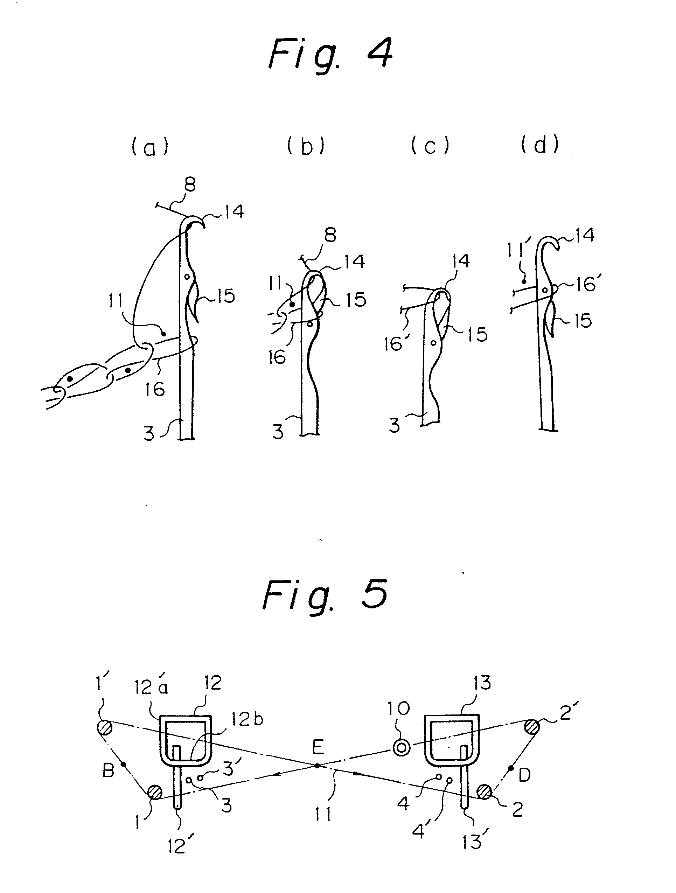

Fig. 4(a) to 4(d) show the above-mentioned process for the latch needle 3. Fig. 4(a) shows the latch needle 3 at the upper dead point, and a warp yarn is supplied to a hook 14 of the latch needle 3 positioned in the upper dead point by a warp yarn supply guide. At this time, a knitting loop 16 formed in a previous step is wound at a lower position from a latch 15 turned toward a lower direction. A state wherein the hollow fiber membrane(s) 11 is inserted to a space surrounded by a warp yarn 8 wound around the hook, the knitting loop 16 of the warp yarn, and a main body of the latch needle 3 is shown in Fig. 4(a).

Fig. 4(b) shows the latch needle 3 when lowered, and the knitting loop 16 formed in the previous step raises the latch 15, and then the hook 14 is closed. At the same time, the guide bar is also lowered and then the hollow fiber membrane(s) 11 is removed from the guide bar. A state wherein the latch needle 3 is further lowered and is in a position just before the lower dead point, and a new knitting loop 16 is formed, is shown in Fig. 4(c).

Fig. 4(c) shows a state wherein the latch needle 3 is raised and a next hollow fiber membrane(s) 11 is introduced to a upper position from the knitting loop 16. The hollow fiber membrane knitted fabric is formed by continuously repeating the above processes.

It is necessary to apply a tension having a minimum value to the hollow fiber membrane(s) 11 used as a weft yarn and the warp yarns 8 and 8'; 9 and 9' to form a knitted fabric, and it is necessary to apply a tension having a minimum value to the knitted fabric, to pull the formed knitted fabric. Although the above tensions vary slightly during the knitting process, the tension of the hollow fiber membrane(s) 11 is lowered remarkably at an instant that the hollow fiber membrane(s) 11 is removed from the guide bar 1 and 1'; 2 and 2'. When the tension of the warp yarn is larger than that of the hollow fiber membrane(s) at this instant and the hollow fiber membrane(s) is not supported by a suitable means, the hollow fiber membrane(s) may be pulled into a groove of the trick plates 5 and 5'.

The stationary protruding bars 12' and 13' are used to prevent a removal of the hollow fiber membrane(s) 11 from the guide bars 1 and 1'; 2 and 2' and an enter into the groove of the trick plate 5 and 5', and preferably a distance between the stationary protruding bar 13' and the groove of the trick plate 5 is small enough to obtain the required effect from the stationary protruding bar.

Further, it is possible to optionally determine the heights of the guide bars 1 and 1'; 2 and 2' and the latch needles 3 and 3'; 4 and 4', taking into consideration a relationship of a distance between the guide bar and the latch needle. In general, preferably a height of a top end of the latch needle is determined to be lower than a height of a top end of the guide bar, to avoid any contact between the hollow fiber membrane(s) removed from the guide bar and the latch needle.

As apparent from the forgoing description, the hollow fiber membrane(s) is in contact with each guide bar 1 and 1'; 2 and 2'', the stationary guides 12 and 13, and the stationary protruding bars 12' and 13', and accordingly preferably the surfaces of these members are made smooth, to avoid damage to the hollow fiber membrane(s), as much as possible. Accordingly, it is possible to use a ceramic for this purpose.

Further, preferably the plurality of the guide bars 1 and 1'; 2 and 2' are arranged so that the hollow fiber membrane(s) can be easily removed from the guide bars when the guide bars 1 and 1'; 2 and 2' are lowered. Accordingly, for example, when a pair of two guide bars 1 and 1'; 2 and 2' are arranged on both sides of the apparatus, respectively, it is better to arrange the guide bars 1 and 2 of the front side and slightly inward, compared with a position of the guide bars 1' and 2, at the back side.

Although two guide bars are arranged at a left side and a right side, respectively, as the guide bars 1 and 1'; 2 and 2' in the above-mentioned embodiment, only one guide bar may be used for each of the left side and the right side, and it is possible to use three or more guide bars as required. When one guide bar is used at the left side and at the right side, however it is necessary to maintain a space sufficient to arrange a latch needle in an area enclosed by a running path of the traverse guide. Further, although two latch needles are arranged at the left side and the right side, it is possible to use 1 or more latch needles. When manufacturing a knitted fabric having a broad width, generally it is preferable to increase the number of the latch needles, to increase the number of warp yarns. A distance between the latch needles may be optionally determined. When a plurality of the above-mentioned apparatuses are arranged in a lateral direction, a plurality of knitted fabrics can be simultaneously obtained.

The stationary guides 12 and 13 function to remove the hollow fiber membrane(s) from the guide bar and prevent a jump of a latch of the latch needle. Accordingly, the stationary guide may be a plate-like member as shown in Fig. 1 or may be a bar-like member as shown in Fig. 2. A side face 12a of the stationary guide is used to remove the hollow fiber membrane(s) from the guide bar and a front face 12b is used to prevent the jump of the latch of the latch needle in the stationary guide of Fig. 2. The above two functions can be separated in the stationary guide 12 and 13, and two elements having each function, respectively, can be individually arranged.

As described herebefore, the hollow fiber membrane(s) is removed from the guide bar, when the latch needle is in a position near to a position shown in Fig. 4(b), and in this case, since there is a distance between the guide bar and the latch needle, the hollow fiber membrane(s) 11 removed from the guide bar will not be directly contacted with the latch needle.

Although the present invention is described with reference to Figs. 1 to 4, it is possible to constitute a running path of the traverse guide in a figure-of-eight like running path in the plane, as shown in Fig. 5. In this case, the traverse guide 10 passes from a middle point E in Fig. 5 to a side opposite to a hook of the latch needles 3 and 3' at a left side of Fig. 5, turn around two guide bars 1 and 1', run over a hook side of the latch needles 3 and 3', return again to the point E, pass a side opposite to a hooks of latch needle 4 and 4' at a right side of Fig. 5, turn around two guide bars 2 and 2', run over a hook side of the latch needles 4 and 4' and arrive at the point E. As a result, a circular movement of the traverse guide is completed.

The hollow fiber membrane knitted fabric is manufactured by the apparatus described herebefore in the present invention, but when the hollow fiber membrane knitted fabric is manufactured as a continuous knitted fabric, it is probable that a hollow fiber membrane near to a cutting portion will be damaged or the knitted fabric in a position near to the cutting portion will come loose upon cutting the knitted fabrics.

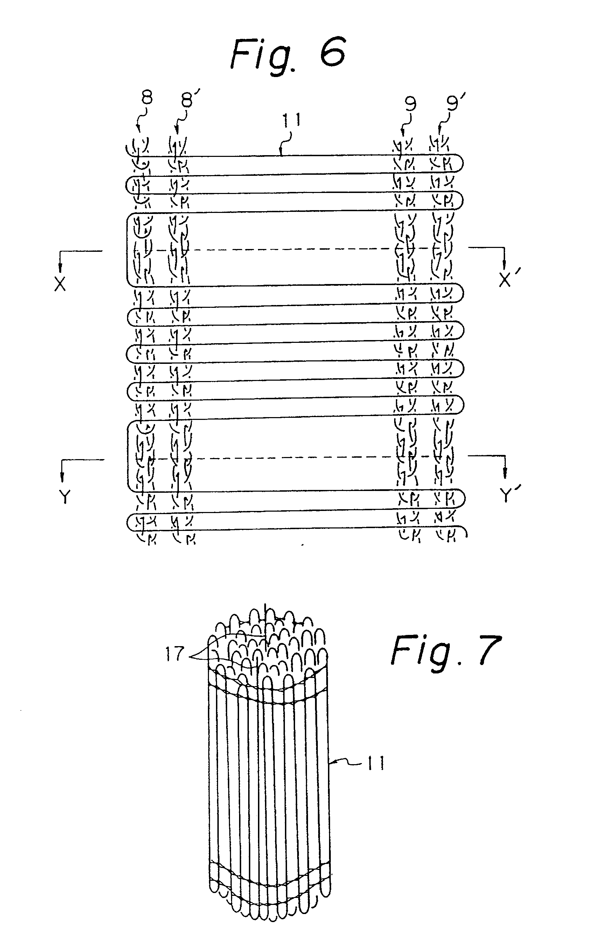

To eliminate the above problem, it is possible to adopt a method whereby a supply of the hollow fiber membrane is stopped when the knitted fabric having a predetermined length is formed, a portion constituted only with warp yarns is formed, and the hollow fiber membrane knitted fabric is again formed, in the present invention. Fig. 6 shows an example of the hollow fiber membrane knitted fabric obtained by this method. Note, in this drawing, a length of a portion forming the hollow fiber membrane knitted fabric is shortened to simplify the drawing. Although a number of knitting loops constituted only with the warp yarns is not specially limited, the number of knitting loops may be around 2 to 10.

When forming a portion constituted with warp yarns, it is preferable to run the traverse guide along a specific side which is either over the guide bar at the left side or the guide bar at the right side. When the X-X' portion and Y-Y' portion in which the knitted fabric is formed only with the warp yarns, as shown in Fig. 6, are cut, the open ends i.e., cut portions of the hollow fiber membranes, are at the same side of the knitted fabric in the above-mentioned method, and thus the operation of manufacturing a membrane module become easy. Namely, the cut hollow fiber membrane knitted fabric is wound as shown in Fig. 7 and an end or both ends of the bundle of the hollow fiber membrane are fixed with a resin, and since the cutting portion of the hollow fiber membrane is arranged at the same side when using the above-mentioned method, a resin fixing can be applied only to the one side, i.e., the cutting portion side.

In the manufacture of the hollow fiber membrane knitted fabric in accordance with the present invention, it is preferable to supply a warp yarn having a different colour from that of the other warp yarn, to at least one latch needle. For example, in an example shown in Fig. 2, when using warp yarns having different colours as a warp yarn supplied to the latch needles 3 and 3' and a warp yarn supplied to the latch needles 4 and 4', an operator can find a cutting portion of the hollow fiber membrane, i.e., an opening side thoseof, by noting the colour of the warp yarn in the cutting portion when manufacturing a membrane module.

As described herebefore, it is possible to obtain a continuous hollow fiber membrane knitted fabric in which a hollow fiber membrane is not cut and folded in a selvage portion with an extremely high efficiency by using the apparatus in accordance with the present invention. Further, it is possible to easily obtain the hollow fiber membrane knitted fabric having an optional width by optionally determining a knitting width.

Example 1

A knitting apparatus having a distance between a guide bar at a left side and a guide bar at a right side of 100 mm, latch needles arranged in a number of 2 for each side, and a constitution shown in Figs. 1 to 3 is prepared by improving a conventional raschel knitting machine.

A hollow fiber membrane(s) in which sixteen polyethylene hollow fiber membrane EHF270T supplied from Mitsubishi Rayon Co. are bundled is used, and a polyester textured yarn 300 d/96 of a black colour is used as a warp yarn at a right side and the same yarn of a light brown colour is used as a warp yarn at a left side.

The movements of the guide bars and the latch needles are synchronized, and raised and lowered twice in each circulation cycle of a traverse guide. A running speed of the traverse guide is 55 reciprocations per minute, and a tension of the warp yarn is between 25 and 30 g per a warp yarn.

When the knitting apparatus is operated under the above conditions and a reciprocal movement from a left end of the traverse guide is performed 130 times, the movement of the traverse guide is stopped for a time corresponding to three repetitious of the movement of the traverse guide, to knit a chain net formed only of the warp yarn. After that, the knitted fabric including 10 pieces of the hollow fiber membrane knitted fabric formed by moving the traverse guide 130 times is manufactured, and the chain net portions formed by the warp yarns are cut (see lines X-X' and Y-Y' in Fig. 6).

The obtained hollow fiber membrane knitted fabric is wound in a spiral state as shown in Fig. 7, and accommodated in a cylindrical receptacle of a polycarbonate. An end of the hollow fiber membrane knitted fabric is fixed with an epoxy resin to manufacture a membrane module having a membrane area of 0.3 m². The obtained membrane module is given a hydrophilic treatment using an alcohol and then a water passing test is applied to the membrane module as a leak test. As a result, a good result of the leak test is obtained, and the fact that the hollow fiber membrane is not damaged during the process of manufacturing the knitted fabric is confirmed.

Example 2

A hollow fiber membrane knitted fabric is prepared under the same conditions as used to manufacture the hollow fiber membrane knitted fabric of Example 1, except for the following:

Distance between a guide bar at a left side and a guide bar at a right side: 450 mm

Running speed of the traverse guide: 30 reciprocations per minute

Reciprocal movements for a piece of the hollow fiber membrane knitted fabric of the traverse guide: 240 repetitious

As a result, an undamaged hollow fiber membrane knitted fabric is obtained.

CAPABILITY OF EXPLOITATION IN INDUSTRY

The hollow fiber membrane knitted manufactured in accordance with a method or an apparatus of the present invention has superior handling properties compared with a bundle of hollow fiber membranes obtained from a conventional skein method. The hollow fiber membrane knitted fabric of the present invention can be used in fields such as artificial lungs, artificial dialyzers, plasmapheresis, in the pure water manufacturing field, in a water purifier, and in the gas filtering field, liquid filtering field, gas separating field, and cell culturing field, or the like.

LIST OF THE REFERENCE NUMBER IN DRAWINGS

| | |
|---|---|
| 1,1'; 2,2' | ... Guide bar |
| 3,3'; 4,4' | ... Latch needle |
| 5,5' | ... Trick plate |
| 6,6'; 7,7' | ... Warp yarn supply guide |
| 8,8'; 9,9' | ... Warp yarn |
| 10 | ... Traverse guide |
| 11 | ... Hollow fiber membrane(s) |
| 12, 13 | ... Stationary guide |
| 12', 13' | ... Stationary protruding bar |
| 17 | ... Cutting portion of the hollow fiber membrane(s) |

**Claims**

1. A method of manufacturing a hollow fiber membrane knitted fabric in which an endless hollow fiber membrane is arranged in a folded state, wherein said method comprises supplying the hollow fiber membrane from a hollow fiber membrane supply means to a pair of hollow fibre membrane guide bars, which are arranged at a left side and a right side, respectively, with a predetermined distance between them and which can be raised and lowered, the supply means running in a plane arond the pair of guide bars, and supplying a warp yarn from substantially upper positions from a latch needle capable of being raised and lowered into a region enclosed by a running path of the hollow fiber membrane supply means, respectively.

2. A method according to claim 1, wherein the hollow fiber membrane guide bar and the latch needle are synchronously raised and lowered twice during a cyclic movement of the hollow fiber membrane supply means.

3. A method according to claim 1 or claim 2, wherein the movement of the hollow fiber membrane supply means is temporarily stopped to form a portion of a knitted fabric constituted only with the warp yarns.

4. A method according to any preceding claim wherein 2 or more latch needles are used and the warp yarn supplied to each latch needle is a different colour.

5. A method according to any preceding claim, wherein a pair of hollow fiber membrane guide bars are arranged with a distance then of at least 50 mm.

6. An apparatus for manufacturing a hollow fiber membrane knitted fabric, comprising a pair of hollow fiber membrane guide bars arranged at a left side and a right side, respectively, with a predetermined distance between them and which can be raised and lowered, a hollow fiber membrane supply means running in a plane around the pair of hollow fiber membrane guide bars, a plurality of latch needles which can be raised and lowered in a region enclosed by a running path of the hollow fiber membrane supply means and warp yarn supply means arranged at a position substantially above the latch needles and able to supply a warp yarn to each latch needle, respectively, the apparatus being constituted in such a manner that the hollow fiber membrane guide bars and the latch needles are synchronously raised and lowered twice during a cyclic movement of the hollow fiber membrane supply means.

7. An apparatus according to claim 6 comprising two or more latch needles.

8. An apparatus according to claim 6 or claim 7 in which the distance between the guide bars is at least 50mm.

9. A hollow fibre membrane module comprising a hollow fibre membrane knitted fabric made by the process according to any of claims 1 to 5.

10. Use of the hollow fibre membrane knitted fabric according to claim 9 in artificial lungs, artificial dialyzers, plasmapheresis, water purification, fluid filtering or separation and cell culturing.

# Fig. 1

# Fig. 2

# Fig. 3

# Fig. 4

(a)    (b)    (c)    (d)

# Fig. 5

# Fig. 6

# Fig. 7

# INTERNATIONAL SEARCH REPORT

International Application No  PCT/JP89/01053

## I. CLASSIFICATION OF SUBJECT MATTER (if several classification symbols apply, indicate all) *

According to International Patent Classification (IPC) or to both National Classification and IPC

Int. Cl$^4$     B01D13/01, D04B23/02

## II. FIELDS SEARCHED

### Minimum Documentation Searched [7]

| Classification System | Classification Symbols |
|---|---|
| IPC | B01D13/01, D04B23/02 |

### Documentation Searched other than Minimum Documentation to the Extent that such Documents are Included in the Fields Searched *

| | | |
|---|---|---|
| Jitsuyo Shinan Koho | 1926 | – 1989 |
| Kokai Jitsuyo Shinan Koho | 1971 | – 1989 |

## III. DOCUMENTS CONSIDERED TO BE RELEVANT [9]

| Category * | Citation of Document, [11] with indication, where appropriate, of the relevant passages [12] | Relevant to Claim No. [13] |
|---|---|---|
| Y | JP, A, 62-57965 (Mitsubishi Rayon Co., Ltd.) 13 March 1987 (13. 03. 87) Page 3, lower right column, lines 9 to 10, Fig. 3 (Family : none) | 1 - 6 |
| Y | JP, U, 1-92203 (Mitsubishi Rayon Co., Ltd.) 16 June 1989 (16. 06. 89) Scope of Claim for Utility Model Registration 1, 2, Figs. 1, 2 (Family : none) | 1 - 6 |
| A | JP, U, 61-18143 (Senko Ika Kogyo Kabushiki Kaisha) 1 February 1986 (01. 02. 86) Scope of Claim for Utility Model Registration, Fig. 3 (Family : none) | 1 - 6 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| December 8, 1989 (08. 12. 89) | December 18, 1989 (18. 12. 89) |
| International Searching Authority | Signature of Authorized Officer |
| Japanese Patent Office | |

Form PCT/ISA/210 (second sheet) (January 1985)